# NEUE EUROPÄISCHE PATENTSCHRIFT

(11) **EP 2 563 850 B2**
(45) Veröffentlichungstag und Bekanntmachung des Hinweises auf die Entscheidung über den Einspruch: **02.03.2022**
(45) Hinweis auf die Patenterteilung: 30.03.2016
(21) Anmeldenummer: 11716909.4
(22) Anmeldetag: 27.04.2011
(51) Int. Cl.: C08J 9/00, C08J 9/12, C08J 9/232, C08J 9/16

(54) **EXPANDIERBARES POLYAMIDGRANULAT**
EXPANSIBLE BEADS OF POLYAMIDE
GRANULÉS EXPANSIBLES DE POLYAMIDE

(30) Priorität: 27.04.2010 EP 10161219
(43) Veröffentlichungstag der Anmeldung: 06.03.2013
(73) Patentinhaber: BASF SE, 67056 Ludwigshafen am Rhein (DE)
(72) Erfinder: KRIHA, Olaf, 67433 Neustadt (DE); HAHN, Klaus, 67281 Kirchheim (DE); DESBOIS, Philippe, 68535 Edingen-Neckarhausen (DE); WARZELHAN, Volker, 67273 Weisenheim am Berg (DE); RUCKDÄSCHEL, Holger, 67487 St. Martin (DE); HOFMANN, Maximilian, 68167 Mannheim (DE); EXNER, Christian, 79540 Lörrach (DE); HINGMANN, Roland, 68526 Ladenburg (DE)
(74) Vertreter: BASF IP Association
(86) Internationale Anmeldenummer: PCT/EP2011/056655
(87) Internationale Veröffentlichungsnummer: WO 2011/134996

(56) Entgegenhaltungen:
- WO-A1-2010/000572
- WO-A1-2010/000572
- WO-A2-01/64412
- CA-A1- 2 029 164
- CA-A1- 2 030 646
- FR-A- 1 471 936
- FR-A1- 2 841 253
- FR-A1- 2 856 950
- JP-A- S61 268 737
- NL-A- 6 603 754
- US-A1- 2007 135 613
- ISO 11357-7 (1.5.2002), Plastics-Differential scanning calorimetry (DSC) Part 7, S. 1-11
- Y. P. Khanna,W. P. Kuhn: "Measurement of crystalline index in nylons by DSC: Complexities and recommendations", Journal of Polymer & Science, Part B, Polymer Physics, Vol.35, 1997, Pages 2219-2231
- Dr. Schubnell, Markus, "Bestimmung der Kristallinität bei Polymeren aus DSC-Messungen", User COM, Januar 2001, S. 12-13
- Prof. Dr.-Ing. Karin Lutterbeck, Prof. Dr.-Ing. Helmut Winkel, Thermische Analyse, Fachhochschule Köln, 24.3.2009
- Abstract von D6
- Übersetzung von D6 (maschinell)

## Beschreibung

Die Erfindung betrifft ein expandierbares Granulat auf Polyamidbasis, daraus erhältliche Partikelschäume und Schaumformteile, Verfahren zu deren Herstellung sowie deren Verwendung in der Automobilindustrie, Luftfahrtindustrie, Bauindustrie, Verpackungsindustrie und/oder im Transportwesen.

Schäume auf Polyamidbasis haben aufgrund von verarbeitungstechnischen Problemen und üblicherweise hohen Dichten im Vergleich zu Polystyrol- oder Polyurethanschäumen eine vergleichsweise geringe Anwendungsbreite.

Polyamidschäume mit geringer Dichte sind beispielsweise aus US-A 4,022,719 bekannt. Dabei werden ein oder mehrere spezielle Lactame, ein basisches Alkalimetallsalz eines Lactams als Katalysator, ein Alkylisocyanat-Aktivator und ein Treibmittel eingesetzt.

In US-A 2006/0167124 ist ein expandierbares Granulat auf Polyamidbasis beschrieben, das neben einem Polyamid mindestens eine Verbindung mit einer Isocyanatgruppe und mindestens eine Verbindung mit einer Carbonsäuregruppe enthält.

In der FR 1 471 936 (A), FR 2 856 950 (A1) und FR 2 841 253 (A1) sind expandierbare Polyamidzusammensetzungen mit chemischen Treibmitteln beschrieben.

In der WO-A 2010/000572 sind selbstschäumende Polyamide offenbart, die neben einem Polyamid ein Copolymer enthalten, das bei Erhitzen CO₂ freisetzt und so den Polyamidschaum erzeugt.

Trotz dieser Fortschritte besteht weiterhin ein hoher Bedarf an expandierbaren Polyamidgranulaten und Polyamidschäumen, die neben einer geringen Dichte eine einfache Verarbeitbarkeit aufweisen. Partikelschaumstoffe zeichnen sich hierbei durch hohe Freiheitsgrade in der Formgebung der Schaumstoffteile aus und sind sehr ressourcenschonend einzusetzen, da die Dichte des Schaumstoffes und damit der Rohstoffbedarf und die Schaumeigenschaften beim Vorschäumen eingestellt werden können. Diese Schaumpartikel können dann zu Blöcken oder komplexen Formteilen in einem Arbeitsschritt verschäumt werden.

Es wurde gefunden, dass sich durch Verwendung eines Polyamids, bei dem Kristallinität, Glasübergangs- und Schmelztemperatur in einem bestimmten Bereich liegen, ein expandierbares Polyamidgranulat erhalten lässt, das in einfacher Weise mit Wasserdampf zu Schäumen geringer Dichte expandiert werden kann.

Gegenstand der Erfindung ist daher ein expandierbares Granulat, enthaltend
A) eine Polymermatrix bestehend aus
   A1) mindestens 55 Gew.-% Polyamid (bezogen auf die Summe der Komponenten A1) und A2)) mit einer Kristallinität bis zu 30 % gegebenenfalls einer Schmelztemperatur im Bereich von 100 bis 340 °C und einer Glasübergangstemperatur im Bereich von 0 bis 150°C und
   A2) 0 bis 45 Gew.-% an einem oder mehreren von der Komponente A1) unterschiedlichen thermoplastischen Polymeren;
B) ein oder mehrere physikalische Treibmittel und
C) gegebenenfalls weitere Additive
wobei die Kristallinität gemäß ISO 11357-7 mit Hilfe der Dynamischen Differenzkalorimetrie bestimmt wird,
die Schmelztemperatur nach ISO 11357-3 mit Heiz- und Kühlraten von 20 K/min bestimmt wird und
die Glasübergangstemperatur nach ISO 11357-2 mit Heiz- und Kühlraten von 20 K/min bestimmt wird,
wobei das expandierbare Granulat 0,01 bis 7 Gew.-%, bezogen auf die Summe der Komponenten A) und B), an einem oder mehreren physikalischen organischen Treibmitteln und 0,1 bis 10 Gew.-% H₂O (bezogen auf das Gewicht der Polymermatrix A)) enthält.

Weiterhin Gegenstand der Erfindung ist ein Verfahren zur Herstellung des erfindungsgemäßen Granulats, umfassend die Schritte
a) Bereitstellen des Polyamids A1) oder dessen Vorstufen und gegebenenfalls der Polymerkomponente A2) in geschmolzenem Zustand,
b) Einmischen der physikalischen Treibmittelkomponente B) und gegebenenfalls von einem oder mehreren Additiven C) in die Schmelze,
c) Extrusion und
d) Granulieren der treibmittelhaltigen Schmelze unter Wasser,
wobei 0,1 bis 10 Gew.-% Wasser, bezogen auf die Summe der Komponenten A1) und A2), mittels dynamischer oder statischer Mischer direkt in die aufgeschmolzene Polymermatrix eingebracht werden.

Beschrieben ist weiterhin ein Polyamid-Partikelschaum, erhältlich durch Vorschäumen des erfindungsgemäßen Granulats, sowie Schaumformteile, erhältlich durch Expansion und Verpressen des Polyamid-Partikelschaums.

Weiterhin beschrieben ist die Verwendung des Polyamid-Partikelschaums in der Automobilindustrie, Luftfahrtindustrie, Bauindustrie, Verpackungsindustrie und/oder im Transportwesen.

Die erfindungsgemäßen Granulate, d.h. die oben beschriebenen expandierbaren Granulate auf Polyamidbasis und deren bevorzugte Ausführungsformen, können zu Schaumformteilen niedriger Dichte verarbeitet werden. Die geringe Menge an organischem Treibmittel ist ökologisch wie ökonomisch von Vorteil; außerdem zeigt das expandierbare Polyamidgranulat eine sehr gute Lagerbeständigkeit. Weitere Vorteile sind der sehr geringe Temperaturschrumpf, hohe Dauergebrauchstemperaturen, günstiges Brandverhalten ohne Flammschutzmittel, gute Lösungsmittelbeständigkeit, gute Metallhaftung, hohe Temperaturbeständigkeit sowie eine gute Haftung und Beständigkeit mit Epoxyklebstoffen.

Das erfindungsgemäße Granulat enthält ein Polyamid A1) mit einer Kristallinität bis zu 30 %, einer Glasübergangstemperatur im Bereich von 0 bis 150°C und gegebenenfalls einer Schmelztemperatur im Bereich von 100 bis 340°C.

Der Begriff "Polyamid" bezeichnet erfindungsgemäß thermoplastische Kunststoffe, deren Wiederholeinheiten durch eine Amidgruppe gekennzeichnet sind. Der Begriff umfasst sowohl Homopolymere, d.h. Polyamide, die aus einer Säure- und einer Aminkomponente oder einer Lactamkomponente aufgebaut sind, als auch Copolymere, d.h. Polyamide, die aus mindestens zwei Säure- und/oder Aminkomponenten und/oder Lactamkomponenten aufgebaut sind.

Bei dem Polyamid A1) der Erfindung handelt es sich um ein Homo- oder Copolyamid oder eine Mischung aus mehreren Homo- und/oder Copolyamiden, vorausgesetzt, dass die Mischung den genannten Bedingungen hinsichtlich Teilkristallinität, Glasübergangs- und gegebenenfalls Schmelztemperatur genügt.

"Teilkristallin" bezeichnet erfindungsgemäß Polyamide mit teilweise kristallinen Domänen, die - im Bereich dieser kristallinen Domänen - sowohl einen Glasübergangspunkt als auch einen Schmelzpunkt aufweisen. Die erfindungsgemäße Polyamidkomponente A1) kann auch amorph sein, d.h. eine Kristallinität von 0 % haben. In diesem Fall besitzt die Komponente A1) keine Schmelztemperatur. Der Ausdruck "gegebenenfalls eine Schmelztemperatur im Bereich von 100°C bis 340°C" bedeutet daher, dass die Komponente A1), falls sie nicht amorph ist, in ihren kristallinen Bereichen eine entsprechende Schmelztemperatur aufweist.

Die Kristallinität liegt bevorzugt im Bereich von 1 bis 25 %, besonders bevorzugt von 3 bis 20 %.

Die Schmelztemperatur liegt bei teilkristallinen Polymeren im Bereich von 100 bis 340°C, bevorzugt im Bereich von 130 bis 300°C, besonders bevorzugt von 150 bis 280°C.

Die Glasübergangstemperatur liegt bevorzugt im Bereich von 15 bis 130 °C, besonders bevorzugt von 40 bis 120°C.

Bevorzugt sind daher Polyamide A1) mit einer Kristallinität im Bereich von 1 bis 25 %, einer Schmelztemperatur im Bereich von 130 bis 300°C und einer Glasübergangstemperatur im Bereich von 15 bis 130°C.

Weiterhin bevorzugt sind Polyamide A1) mit einer Kristallinität im Bereich von 1 bis 25 %, einer Schmelztemperatur im Bereich von 100 bis 340°C und einer Glasübergangstemperatur im Bereich von 0 bis 150°C.

Weiterhin bevorzugt sind Polyamide A1) mit einer Kristallinität im Bereich von 1 bis 25 %, einer Schmelztemperatur im Bereich von 130 bis 300°C und einer Glasübergangstemperatur im Bereich von 0 bis 150°C.

Weiterhin bevorzugt sind Polyamide A1) mit einer Kristallinität im Bereich von 1 bis 25 %, einer Schmelztemperatur im Bereich von 100 bis 340°C und einer Glasübergangstemperatur im Bereich von 15 bis 130°C.

Weiterhin bevorzugt sind Polyamide A1) mit einer Kristallinität bis zu 30 %, gegebenenfalls einer Schmelztemperatur im Bereich von 130 bis 300°C und einer Glasübergangstemperatur im Bereich von 15 bis 130°C.

Weiterhin bevorzugt sind Polyamide A1) mit einer Kristallinität bis zu 30 %, gegebenenfalls einer Schmelztemperatur im Bereich von 100 bis 340°C und einer Glasübergangstemperatur im Bereich von 15 bis 130°C.

Weiterhin bevorzugt sind Polyamide A1) mit einer Kristallinität bis zu 30 %, gegebenenfalls einer Schmelztemperatur im Bereich von 130 bis 300°C und einer Glasübergangstemperatur im Bereich von 0 bis 150°C.

Besonders bevorzugt sind Polyamide A1) mit einer Kristallinität im Bereich von 3 bis 20 %, einer Schmelztemperatur im Bereich von 150 bis 280°C und einer Glasübergangstemperatur im Bereich von 40 bis 120 °C.

Weiterhin besonders bevorzugt sind Polyamide A1) mit einer Kristallinität im Bereich von 3 bis 20 %, einer Schmelztemperatur im Bereich von 150 bis 280°C und einer Glasübergangstemperatur im Bereich von 0 bis 150°C.

Weiterhin besonders bevorzugt sind Polyamide A1) mit einer Kristallinität im Bereich von 3 bis 20 %, einer Schmelztemperatur im Bereich von 150 bis 280°C und einer Glasübergangstemperatur im Bereich von 15 bis 130°C.

Weiterhin besonders bevorzugt sind Polyamide A1) mit einer Kristallinität im Bereich von 3 bis 20 %, einer Schmelztemperatur im Bereich von 150 bis 280°C und einer Glasübergangstemperatur im Bereich von 0 bis 150°C.

Weiterhin besonders bevorzugt sind Polyamide A1) mit einer Kristallinität im Bereich von 3 bis 20 %, einer Schmelztemperatur im Bereich von 130 bis 300°C und einer Glasübergangstemperatur im Bereich von 40 bis 120°C.

Weiterhin besonders bevorzugt sind Polyamide A1) mit einer Kristallinität im Bereich von 3 bis 20 %, einer Schmelztemperatur im Bereich von 130 bis 300°C und einer Glasübergangstemperatur im Bereich von 15 bis 130°C.

Weiterhin besonders bevorzugt sind Polyamide A1) mit einer Kristallinität im Bereich von 3 bis 20 %, einer Schmelztemperatur im Bereich von 130 bis 300°C und einer Glasübergangstemperatur im Bereich von 0 bis 150°C.

Weiterhin besonders bevorzugt sind Polyamide A1) mit einer Kristallinität im Bereich von 3 bis 20 %, einer Schmelztemperatur im Bereich von 100 bis 340°C und einer Glasübergangstemperatur im Bereich von 40 bis 120°C.

Weiterhin besonders bevorzugt sind Polyamide A1) mit einer Kristallinität im Bereich von 3 bis 20 %, einer Schmelztemperatur im Bereich von 100 bis 340°C und einer Glasübergangstemperatur im Bereich von 15 bis 130°C.

Weiterhin besonders bevorzugt sind Polyamide A1) mit einer Kristallinität im Bereich von 3 bis 20 %, einer Schmelztemperatur im Bereich von 100 bis 340°C und einer Glasübergangstemperatur im Bereich von 0 bis 150°C.

Weiterhin besonders bevorzugt sind Polyamide A1) mit einer Kristallinität im Bereich von 2 bis 25 %, einer Schmelztemperatur im Bereich von 150 bis 280°C und einer Glasübergangstemperatur im Bereich von 40 bis 120°C.

Weiterhin besonders bevorzugt sind Polyamide A1) mit einer Kristallinität im Bereich von 2 bis 25 %, einer Schmelztemperatur im Bereich von 150 bis 280°C und einer Glasübergangstemperatur im Bereich von 15 bis 130°C.

Weiterhin besonders bevorzugt sind Polyamide A1) mit einer Kristallinität im Bereich von 2 bis 25 %, einer Schmelztemperatur im Bereich von 150 bis 280°C und einer Glasübergangstemperatur im Bereich von 0 bis 110°C.

Weiterhin besonders bevorzugt sind Polyamide A1) mit einer Kristallinität bis zu 30 %, gegebenenfalls einer Schmelztemperatur im Bereich von 150 bis 280°C und einer Glasübergangstemperatur im Bereich von 40 bis 120°C.

Weiterhin besonders bevorzugt sind Polyamide A) mit einer Kristallinität bis zu 30 %, gegebenenfalls einer Schmelztemperatur im Bereich von 150 bis 280°C und einer Glasübergangstemperatur im Bereich von 15 bis 130°C.

Weiterhin besonders bevorzugt sind Polyamide A1) mit einer Kristallinität bis zu 30 %, gegebenenfalls einer Schmelztemperatur im Bereich von 150 bis 280°C und einer Glasübergangstemperatur im Bereich von 0 bis 150°C.

Weiterhin besonders bevorzugt sind Polyamide A1) mit einer Kristallinität im Bereich von 2 bis 25 %, einer Schmelztemperatur im Bereich von 150 bis 280°C und einer Glasübergangstemperatur im Bereich von 40 bis 120°C.

Weiterhin besonders bevorzugt sind Polyamide A1) mit einer Kristallinität im Bereich von 2 bis 25 %, einer Schmelztemperatur im Bereich von 100 bis 340°C und einer Glasübergangstemperatur im Bereich von 40 bis 120°C.

Weiterhin besonders bevorzugt sind Polyamide A1) mit einer Kristallinität bis zu 30 %, gegebenenfalls einer Schmelztemperatur im Bereich von 150 bis 280°C und einer Glasübergangstemperatur im Bereich von 40 bis 120°C.

Weiterhin besonders bevorzugt sind Polyamide A1) mit einer Kristallinität bis zu 30 %, gegebenenfalls einer Schmelztemperatur im Bereich von 100 bis 340°C und einer Glasübergangstemperatur im Bereich von 40 bis 120°C.

Die Kristallinität wird erfindungsgemäß mit Hilfe der Dynamischen Differenzkalorimetrie (DSC, differential scanning calorimetry) durch Integration des Schmelzsignals, d.h. eine Kristallinität von 100 % entspricht 230 J/g (Journal of Polymer Science Part B Polymer Physics 35 (1997) 2219-2231). Die Messung erfolgt erfindungsgemäß gemäß ISO 11357-7.

Die Schmelztemperatur wird erfindungsgemäß nach ISO 11357-3 mit Heiz- und Kühlraten von 20 K/min bestimmt.

Die Glasübergangstemperatur wird erfindungsgemäß nach ISO 11357-2 mit Heiz- und Kühlraten von 20 K/min bestimmt.

Als Polyamide A1) können bekannte, teilweise kommerziell erhältliche Homo- und/oder Copolyamidtypen eingesetzt werden, die das geforderte Eigenschaftsprofil aufweisen.

Weiterhin ist es möglich, durch eine entsprechende Mischung verschiedener monomerer Säure- und/oder verschiedener Aminkomponenten, sowie beispielsweise Anwendung der Unterwassergranulierung Copolyamide herzustellen, die das geforderte Eigenschaftsprofil aufweisen. Dazu können beispielsweise Säure- und Aminmonomere (oder Lactame), die als Homopolyamide eine zu hohe Kristallinität aufweisen, wie Polycaprolactam (PA 6), mit anderen monomeren Komponenten, die als Homopolyamid amorphe oder kaum kristalline Strukturen bilden, wie Polyisophtalsäure (PA 6I), gemischt und zu einem erfindungsgemäßen Copolyamid umgesetzt werden.

Als Polyamid A1) eignen sich auch verschiedene Copolyamide basierend auf mehr als zwei Monomeren wie AB/X, AB/X/Y, X/Y/Z, A₁B₁/A₂B₂, A₁B₁/A₂B₂/A₃B₃, A₁B₁/A₂B₂/X, mit
A, A₁, A₂, A₃ = gleich oder verschieden C₂-C₁₈-Diamin,
B, B₁, B₂, B₃ = gleich oder verschieden C₂-C₁₈-Disäure und
X, Y, und Z = gleich oder verschieden C₄-C₁₄-Lactam.

In einer weiteren, bevorzugten Variante ist das erfindungsgemäß eingesetzte Polyamid A1) ein Copolyamid und wird durch Umamidierung entsprechender Polyamide hergestellt. Dazu eignen sich alle bekannten Umamidierungsmethoden, wie sie zum Beispiel in Kunststoff Handbuch, 3/4, Polyamide 2-5, ISBN 3-446-16486-3 beschrieben sind.

Besonders bevorzugt ist ein reaktives Mischen (Blenden) der jeweiligen Polyamide, insbesondere unmittelbar vor der Schmelzimprägnierung mit der Treibmittelkomponente.

Geeignet für diese Variante sind insbesondere Mischungen aus verschiedenen teilkristallinen oder aus teilkristallinen und amorphen Polyamiden, die durch Umamidierung in der Schmelze zu den erfindungsgemäß eingesetzten (Co)polyamiden A1) umgesetzt werden.

Soweit nicht anders angegeben, erfolgt die Bezeichnung der Polyamid (PA) Typen nach ISO 1874-1. Die Einteilung in teilkristalline oder amorphe Typen folgt der in der Literatur üblichen.

Als teilkristalline Vorläufer des Polyamids A1) eignen sich Homopolyamide wie Polycaprolactam (PA6), Polybutylenadipamid (PA 46), Polyhexamethylenadipamid (PA 66), Polyhexamethylensebacamid (PA 610), Polyhexamethylendodecanamid (PA 612), Poly-11-aminoundecanamid (PA 11), Polylaurinlactam (PA 12), Poly-m-xylylenadipamid (PAMXD 6), Polypentamethylensebacamid (PA 510), 6T/X (X = Lactam), 6T/6I, 6T/6I/XY, 6T/XT (X = geradkettiges oder verzweigtes C₄-C₁₈-Diamin), XT (X = C₄-C₁₈-Diamin), Mischungen von zwei Lactamen wie 6.12. PA PACM 12 (PACM = p-Diaminodicyclohexylmethan) und PA MPMD 6 (MPMD = 2-Methylpentamethylendiamin), PA MPMD T sowie PA MPMD 12. Bevorzugt als teilkristalliner Vorläufer des Polyamids A1) sind PA 6, PA 66, PA 510 und PA 6/66, insbesondere bevorzugt ist PA 6.

Als amorphe Vorläufer des Polyamids A1) eignen sich Homopolyamide wie Polyhexamethylenisophthalamid (PA 6I), PA 6I/6T, PA 6-3-T (Polyamid aus Terephthalsäure und einem Gemisch aus 2,2,4- und 2,4,4-Trimethylhexamethylendiamin). Bevorzugt sind PA PACM 12 (PACM = p-Diaminodicyclohexylmethan) und PA MACM 12 (MACM = 3,3-Dimethyl-p-diaminodicyclohexylmethan). Besonders bevorzugt sind ein Copolymer aus Caprolactam, Hexamethylendiamin, Isophthalsäure und Terephthalsäure (PA 6I/6T) (z.B. Grivory G16, EMS-Chemie GmbH, Groß-Umstadt, Deutschland), Polyamid 6/66/PACM6 (z.B. Ultramid 1C, BASF SE, Ludwigshafen, Deutschland) und Polyamid 6I (z.B. Durethan T40, Lanxess AG, Leverkusen, Deutschland).

Bevorzugt als amorpher Vorläufer des Polyamids A1) ist PA 6I.

Bevorzugte Mischungen zur Erzeugung des Polyamids A1) bestehen aus PA 6, PA 6/66 und/oder PA 610 in Mischung mit PA 6I. Insbesondere bevorzugt ist die Mischung PA 6 und PA 6I.

Die genannten Polyamide sind bekannt und kommerziell erhältlich, PA 6 beispielsweise unter der Bezeichnung Ultramid^{®} B von der BASF SE, Ludwigshafen, Deutschland.

Die erfindungsgemäß eingesetzten Polyamide weisen im Allgemeinen eine Viskositätszahl von 30 bis 350, vorzugsweise 40 bis 200 ml/g auf, bestimmt in einer 0,5 gew.-%igen Lösung in 96 gew.-%iger Schwefelsäure bei 25°C gemäß ISO 307.

Insbesondere für die Mischung PA 6 und PA 6I haben sich folgende Gewichtsverhältnisse bewährt: 1 : 0,25 bis 3, bevorzugt 1 : 0,4 bis 2,5, besonders bevorzugt 1 : 0,5 bis 2.

Aufgrund der obigen Angaben, insbesondere zu den Polyamidtypen, kann der Fachmann in einfacher Weise, gegebenenfalls durch Routineversuche verschiedene geeignete Polyamidkomponenten A1) neben den konkret beschriebenen erhalten.

Gegenstand der Erfindung ist daher auch ein erfindungsgemäßes expandierbares Granulat, wobei die Komponente A1) zwei oder mehr Polyamide aus der Gruppe Polycaprolactam (PA6), Polybutylenadipamid (PA 46), Polyhexamethylenadipamid (PA 66), Polyhexamethylensebacamid (PA 610), Polyhexamethylendodecanamid (PA 612), Poly-11-aminoundecanamid (PA 11), Polylaurinlactam (PA 12), Poly-m-xylylenadipamid (PAMXD 6), Polypentamethylensebacamid (PA 510), 6T/X (X = Lactam), 6T/6I, 6T/6I/XY, 6T/XT (X = geradkettiges oder verzweigtes C₄-C₁₈-Diamin), XT (X = C₄-C₁₈-Diamin), 6.12. PA PACM 12 (PACM = p-Diaminodicyclohexylmethan), PA MACM 12 (MACM = 3,3-Dimethyl-p-diaminodicyclohexylmethan), PA MPMD 6 (MPMD = 2-Methylpentamethylendiamin), PA MPMD T, PA MPMD 12, Polyhexamethylenisophthalamid (PA 6I), PA 6I/6T, PA 6-3-T (Polyamid aus Terephthalsäure und Gemischen aus 2,2,4- und 2,4,4-Trimethylhexamethylendiamin) und deren Umamidierungsprodukte enthält. Bevorzugt enthält die Komponente A1) PA6, PA 6/66 und/oder PA 610 in Mischung mit PA 6I und/oder deren Umamidierungsprodukte.

In einer bevorzugten Ausführungsform besteht die Polymermatrix A) aus der Polyamidkomponente A1), d.h. (A2) = 0 %.

Als Komponente A2) enthält das erfindungsgemäße Granulat gegebenenfalls bis zu 45 Gew.-% (bezogen auf die Summe der Komponenten A1) und A2) an einem oder mehreren von der Komponente A1) unterschiedlichen thermoplastischen Polymeren.

Die Komponente A2) ist vorzugsweise mit der Polyamidkomponente A1) nicht mischbar, so dass es zur Ausbildung von Domänen der Komponenten A1) und A2) kommt. Enthält das erfindungsgemäße Granulat beide Komponenten, können die erfindungsgemäßen Eigenschaften der Polyamidkomponente daher durch Messungen an Domänen der Polyamidkomponente A1) bestimmt werden. Bevorzugt handelt es sich bei der Komponente A2) nicht um Polykondensate.

In einer bevorzugten Ausführungsform enthält das erfindungsgemäße Granulat 0,1 bis 20 Gew.-%, besonders bevorzugt 0,4 bis 15 Gew.-%, insbesondere 1 bis 12 Gew.-% (bezogen auf die Summe der Komponenten A1) und A2)) an einem oder mehreren thermoplastischen Polymeren A2), insbesondere an einem oder mehreren Styrolpolymeren (siehe unten).

Bevorzugt ist auch ein expandierbares Granulat, wobei die Polymermatrix A) 0,1 bis 4,9 Gew.-% bezogen auf die Summe der Komponenten A1) und A2) an einem oder mehreren thermoplastischen Polymeren A2) enthält.

Als Komponente A2) sind inerte Polymere bevorzugt, die eine höhere Löslichkeit des Treibmittels aufweisen als das Polyamid A1) und so als Treibmittelreservoir dienen. Durch den Zusatz einer solchen Komponente A2) können Schäume mit einer niedrigen Dichte, bevorzugt im Bereich um 25 bis 100 g/l, hergestellt werden.

Bevorzugt als Komponente A2) sind daher Styrolpolymere, Polyacrylate, Polyolefine, Polysulfone, Polyethersulfone, Polyphenylenether und Blends aus zwei oder mehreren dieser Polymere.

Besonders bevorzugt als Komponente A2) sind Styrolpolymere und/oder deren Blends mit Polyphenylenether.

Besonders bevorzugt ist auch ein expandierbares Granulat, enthaltend als Komponente A2) ein oder mehrere Styrolpolymere und/oder deren Blends mit einem oder mehreren Polyphenylenethern.

Erfindungsgemäß umfasst der Begriff Styrolpolymer Polymere auf Basis von Styrol, alpha-Methylstyrol oder Mischungen von Styrol und alpha-Methylstyrol; analog gilt dies für den Styrolanteil in SAN, AMSAN, ABS, ASA, MBS und MABS (siehe unten).

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-alpha-Methstyrol-copolymere, Acrylnitril-Butadien-Styrolpolymerisate (ABS), Styrol-Acrylnitril-Copolymere (SAN), Acrylnitril-alpha-Methylstyrol-Copolymere (AMSAN), Acrylnitril-Styrol-Acrylester (ASA), Methacrylat-Butadien-Styrol (MBS), Methylmethacrylat-Acrylnitril-Butadien-Styrol (MABS)-polymerisate oder Mischungen davon oder mit Polyphenylenether (PPE) eingesetzt.

Es können auch Polymerrecyklate der genannten thermoplastischen Polymere, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-% (bezogen auf die Komponente A2)).

Zur Herstellung des erfindungsgemäßen Granulats wird eine Schmelze der Komponenten A1) und gegebenenfalls A2) mit der Treibmittelkomponente B) imprägniert.

Als Treibmittelkomponente B) eignen sich ein oder mehrere physikalische, organische Treibmittel wie aliphatische Kohlenwasserstoffe mit 2 bis 7 Kohlenstoffatomen, Alkohole, Ketone, Ether und halogenierte Kohlenwasserstoffe. Bevorzugt werden iso-Pentan, n-Pentan, neo-Pentan, iso-Butan, n-Butan, Ethanol und iso-Propanol eingesetzt, besonders bevorzugt iso-Pentan, n-Pentan und neo-Pentan sowie Mischungen von zwei oder mehreren dieser Isomere, z.B. eine Mischung aus n- und iso-Pentan. Bevorzugt sind auch Mischungen aus mindestens zwei physikalischen, organischen Treibmitteln, z.B. ein Pentan und Ethanol. Die treibmittelhaltige Polymerschmelze enthält die Treibmittelkomponente in homogener Verteilung in einem Anteil von insgesamt 0,01 bis 7 Gew.-%, bevorzugt 0,04 bis 1,0 Gew.-%, besonders bevorzugt 0,06 bis 0,2 Gew.-% bezogen auf die treibmittelhaltige Polymerschmelze.

Zur Verbesserung der Verschäumbarkeit wird Wasser in die Polymermatrix eingebracht. Die Zugabe von Wasser kann beispielsweise direkt über die Verwendung eines wasserhaltigen Ausgangsmaterials, über die Zugabe in die Polymerschmelze oder über die Zugabe bei oder nach der Granulierung erfolgen. Bevorzugt erfolgt die Zugabe von Wasser direkt in die aufgeschmolzene Polymermatrix. Die Zugabe des Wassers kann örtlich und zeitlich vor, mit oder nach der Dosierung der Treibmittel erfolgen. Eine homogene Verteilung des Wassers kann mittels dynamischer oder statischer Mischer erreicht werden. 0,1 bis 10 Gew.-%, bevorzugt 0,3 bis 8 Gew.-%, besonders bevorzugt 0,5 bis 4 Gew.-% Wasser, bezogen auf die Summe der Komponenten A1) und A2), sind ausreichend.

Die erfindungsgemäßen Granulate auf Polyamidbasis weisen in der Regel eine Schüttdichte von bis zu 900 g/l, bevorzugt im Bereich von 400 bis 800 g/l, besonders bevorzugt im Bereich von 500 bis 700 g/l auf. Bei Verwendung von Füllstoffen können in Abhängigkeit von der Art und Menge des Füllstoffes Schüttdichten im Bereich von größer als 900 g/l auftreten.

Neben der Treibmittelkomponente und Wasser können weitere Additive und Hilfsstoffe zugegeben werden. Bevorzugt sind dabei die gegebenenfalls in der Polymerzusammensetzung bereits enthaltenen Additive und Hilfsstoffe, so kann Talkum als Nukleierungshilfsmittel verwendet werden.

Zur Herstellung des erfindungsgemäßen Granulats und des daraus erhaltenen Partikelschaums wird das Treibmittel direkt in die Polymerschmelze bei erhöhten Drücken eingemischt, und/oder es wird ein bereits mit dem Treibmittel imprägniertes Polymermaterial geschmolzen. Ein mögliches Verfahren umfasst die Stufen a) Schmelzeerzeugung, b) Einbringung und Mischen der Treibmittel, c) ggf. Kühlen, d) Fördern, e) Granulieren und f) Expandieren. Jede der Stufen a) bis e) kann durch die in der Kunststoffverarbeitung bekannten Apparate oder Apparatekombinationen ausgeführt werden. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Zur Einmischung der Treibmittel eignen sich statische Mischer oder dynamische Mischer, beispielsweise Extruder. Zur Einstellung der gewünschten Schmelzetemperatur kann gegebenenfalls eine Kühlung der Schmelze vorgenommen werden. Dazu eignen sich die eingesetzten Mischaggregate, separaten Kühler oder Wärmeaustauscher. Die Granulierung erfolgt vorteilhaft durch druckbeaufschlagte Unterwassergranulierung. Damit wird eine Expansion der treibmittelhaltigen Schmelze beim Düsenaustritt vollständig oder zumindest teilweise unterdrückt. Zum Druckaufbau für die Düsen der Granulierung kann das Mischaggregat (Extruder) an sich oder eine zusätzliches, druckaufbauendes Schmelzeaggregat eingesetzt werden. Bevorzugt wird eine Zahnradpumpe eingesetzt. Zur Durchführung des Verfahrens geeignete Apparateanordnungen sind beispielsweise, ohne darauf beschränkt zu sein:
a) Polymerisationsreaktor - statischer Mischer/Kühler - Zahnradpumpe - Granulator
b) Polymerisationsreaktor - Schmelzeextruder- Zahnradpumpe - Granulator
c) Extruder - statischer Mischer- Granulator
d) Extruder - statischer Mischer - Zahnradpumpe - Granulator
e) Extruder - Granulator
f) Extruder - statischer Mischer- Zahnradpumpe - Granulator
g) Extruder - Zahnradpumpe - statischer Mischer / Wärmetauscher - Zahnradpumpe - Granulator
h) Extruder - statischer Mischer - Zahnradpumpe - statischer Mischer / Wärmetauscher- Zahnradpumpe - Granulator

Weiterhin kann die Anordnung ein oder mehrere Seitenextruder oder Seitenbeschickungen zur Einbringung von weiteren Polymeren und Additiven, z.B. von Feststoffen oder thermisch empfindlichen Zusatzstoffen aufweisen. Zudem können flüssige Additive an jedem Ort des Verfahrens injiziert werden, bevorzugt im Bereich der statischen und dynamischen Mischaggregate.

Die treibmittelhaltige Polymerschmelze wird in der Regel mit einer Temperatur im Bereich von 120 bis 400°C, bevorzugt 160 bis 350°C, besonders bevorzugt im Bereich von 170 bis 280°C durch die Düsenplatte gefördert.

Die Düsenplatte wird mindestens auf die Kristallisationstemperatur der treibmittelhaltigen Polymerschmelze beheizt, um Polymerablagerungen in den Düsen zu verhindern und eine störungsfreie Granulierung zu gewährleisten. Bevorzugt liegt die Temperatur der Düsenplatte im Bereich von 10 bis 200°C, besonders bevorzugt 10 bis 120°C über der Kristallisationstemperatur der treibmittelhaltigen Polymerschmelze. Die Wassertemperatur beträgt vorzugsweise 10-90, besonders bevorzugt 20-80, insbesondere 40-70 C°.

Um marktfähige Granulatgrößen zu erhalten, sollte der Durchmesser (D) der Düsenbohrungen am Düsenaustritt im Bereich von 0,2 bis 2,0 mm, bevorzugt im Bereich von 0,3 bis 1,5 mm, besonders bevorzugt im Bereich von 0,3 bis 1,0 mm liegen. Damit lassen sich auch nach Strangaufweitung Granulat, insbesondere im Bereich 0,4 bis 1,5 mm gezielt einstellen.

Besonders bevorzugt wird ein Verfahren zur Herstellung eines erfindungsgemäßen Granulats, umfassend die Schritte
a) Her- oder Bereitstellen einer Schmelze der Polymerkomponenten A1) und gegebenenfalls A2),
b) Einmischen von mindestens einer Treibmittelkomponente und Wasser und gegebenenfalls von Additiven, wie Talkum, in die Polymerschmelze mittels statischen oder dynamischen Mischers bei einer Temperatur von mindestens 150°C,
c) thermisches Homogenisieren und ggf. Kühlen der Treibmittel- und Polymerschmelze auf eine Temperatur von mindestens 120°C
d) Austrag durch eine Düsenplatte mit Bohrungen, deren Durchmesser am Düsenaustritt höchstens 1,5 mm beträgt,
e) Granulieren der treibmittelhaltigen Schmelze direkt hinter der Düsenplatte unter Wasser bei einem Druck im Bereich von 1 bis 20 bar, bevorzugt 5-20 bar, beispielsweise 5-10 bar oder 15-20 bar,
f) Vorschäumen des erhaltenen Granulats zu einem PA-Partikelschaum,
wobei 0,1 bis 10 Gew.-% Wasser, bezogen auf die Summe der Komponenten A1) und A2), mittels dynamischer oder statischer Mischer direkt in die aufgeschmolzene Polymermatrix eingebracht werden.

Schritt (f) des erfindungsgemäßen Verfahrens wird üblicherweise zeitlich getrennt von den Schritten (a) bis (e) beispielsweise bei einem Anwender durchgeführt.

Iternativ kann die Beaufschlagung des oder der Polymere mit Treibmittel auch im nicht geschmolzenen Zustand, beispielsweise unter Druck in einem Autoklaven erfolgen. Dazu werden beispielsweise Polymerpartikel in einem Autoklaven vorgelegt und mit dem physikalischen, organischen Treibmittel (wie Pentan) imprägniert bzw. gesättigt. Nach Entspannen des Autoklaven werden die imprägnierten Polymerpartikel zum Vorexpandieren erhitzt.

Gegenstand der Erfindung ist auch ein erfindungsgemäßes expandierbares Granulat, erhältlich durch
a) Bereitstellen einer Mischung enthaltend zwei oder mehrere Polyamide aus der Gruppe Polycaprolactam (PA6), Polybutylenadipamid (PA 46), Polyhexamethylenadipamid (PA 66), Polyhexamethylensebacamid (PA 610), Polyhexamethylendodeanamid (PA 612), Poly-11-aminoundecanamid (PA 11), Polylaurinlactam (PA 12), Poly-m-xylylenadipamid (PAMXD 6), Polypentamethylensebacamid (PA 510), 6T/X (X=Lactam), 6T/6I, 6T/6I/XY, 6T/XT (X= geradkettiges oder verzweigtes C₄-C₁₈-Diamin), XT (X=C₄-C₁₈-Diamin), 6.12. PA PACM 12 (PACM = p-Diaminodicyclohexylmethan), PA MACM 12 (MACM = 3,3-Dimethyl-p-diaminodicyclohexylmethan), PA MPMD 6 (MPMD = 2-Methylpentamethylendiamin), PA MPMD T, PA MPMD 12, Polyhexamethylenisophthalamid (PA 6I), PA 6I/6T, PA 6-3-T (Polyamid aus Terephthalsäure, Gemische aus 2,2,4- und 2,4,4-Trimethylhexamethylendiamin) und deren Umamidierungsprodukten,
b) Einmischen der physikalischen Treibmittelkomponente B) und gegebenenfalls von einem oder mehreren Additiven C) in die Schmelze,
c) Extrusion und
d) Granulieren der treibmittelhaltigen Schmelze unter Wasser,
wobei 0,1 bis 10 Gew.-% Wasser, bezogen auf die Summe der Komponenten A1) und A2), mittels dynamischer oder statischer Mischer direkt in die aufgeschmolzene Polymermatrix eingebracht werden.

Die erfindungsgemäßen Granulate können in einem ersten Schritt mittels Heißluft oder Wasserdampf im so genannten Vorschäumen zu den erfindungsgemäßen Schaumpartikeln mit einer Dichte im Bereich von 25 bis 300 g/l, insbesondere 60 bis 200 g/l vorgeschäumt und in einem zweiten Schritt in einer geschlossenen Form zu Schaumformteilen (aus Partikelschaum) verschweißt werden. Hierzu werden die vorgeschäumten Partikel in nicht gasdicht schließende Formen gebracht und mit Wasserdampf beaufschlagt (zum Beispiel 1,8 bis 3,2 bar). Nach dem Abkühlen können die Formteile entnommen werden.

Die erfindungsgemäßen Granulate können 0 bis 50, insbesondere bis zu 40, vorzugsweise bis zu 30 Gew.-%, bezogen auf die Polymermatrix an weiteren Additiven C) enthalten.

Bevorzugt ist ein expandierbares Granulat gemäß einem der Ansprüche 1 bis 9 enthaltend als Additive C) 0,1 bis 40 Gew.-% (bezogen auf die Summe der Komponenten A), B) und C)) an einer oder mehreren Verbindungen aus der Gruppe der Stabilisatoren, Oxidationsverzögerern, Mittel gegen Wärmezersetzung und Zersetzung durch ultraviolettes Licht, Gleit- und Entformungsmittel, Farbstoffe, Pigmente, Keimbildungsmittel, Weichmacher, Flammschutzmittel und Füllstoffe.

Zur Stabilisation des Extrusionsvorgangs kann das erfindungsgemäße Granulat Verbindungen enthalten, die eine Erhöhung des Molekulargewichts bewirken wie Kettenverlängerer und/oder -Verzweiger und/oder Vernetzer. Beispiele sind Amine, Carboxylverbindungen, Carbodiimide, Oxazoline, epoxyfunktionalisierte - und Maleinsäureanhydridgruppen enthaltende Verbindungen, die als niedermolekulare Verbindungen und/oder funktionalisierte Polymere, beispielsweise auf Styrol- oder Acrylatbasis, eingesetzt werden. Geeignet sind beispielsweise Verbindungen, wie sie unter den Joncryl^{®} ADR Marken von der BASF SE vertrieben werden.

Als Vernetzungsmittel können beispielsweise wasserlösliche Homopolymere auf Basis von Acrylsäure zugesetzt werden, wie sie beispielsweise unter den Sokalan^{®} PA-Marken von der BASF SE erhältlich sind.

Als Komponente C) können die erfindungsgemäßen Granulate 0 bis 3, bevorzugt 0,04 bis 3, vorzugsweise 0,05 bis 1,5 und insbesondere 0,1 bis 1 Gew.-% eines Schmiermittels enthalten.

Bevorzugt sind Al-, Alkali-, Erdalkalisalze oder Ester oder Amide von Fettsäuren mit 10 bis 44 C-Atomen, vorzugsweise mit 14 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1-oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitrat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als weitere Komponenten C) können die erfindungsgemäßen Granulate Wärmestabilisatoren oder Antioxidantien oder deren Mischungen, ausgewählt aus der Gruppe der Kupferverbindungen, sterisch gehinderter Phenole, sterisch gehinderter aliphatischer Amine und/oder aromatischer Amine, enthalten.

Kupferverbindungen sind in den erfindungsgemäßen Granulaten gegebenenfalls zu 0,01 bis 3, vorzugsweise 0,07 bis 1,5 und insbesondere 0,05 bis 1 Gew.-% enthalten, vorzugsweise als Cu-(I)-Halogenid, insbesondere in Mischung mit einem Alkalihalogenid, vorzugsweise KI, insbesondere im Verhältnis 1 : 4, oder einem sterisch gehinderten Phenol oder einer Aminstabilisators oder deren Mischungen enthalten.

Als Salze des einwertigen Kupfers kommen vorzugsweise Kupfer(I)-Acetat, Kupfer(I)-Chlorid, -Bromid und -Iodid in Frage. Sie sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Polymerkomponente ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6, Polyamid 6.6 und Polyamid 6I.

Eine allgemeine Übersicht über Weichmacher, die für Polyamide geeignet sind, können Gächter/Müller, Kunststoffadditive, C. Hanser Verlag, 2. Ausgabe, S. 296, entnommen werden.

Als Weichmacher geeignete, übliche Verbindungen sind z.B. Ester der p-Hydroxybenzoesäure mit 2 bis 12 C-Atomen in der Alkoholkomponente, Amide von Arylsulfonsäuren mit 2 bis 12 C-Atomen in der Aminkomponente, bevorzugt Amide der Benzolsulfonsäure.

Als Weichmacher kommen u.a. p-Hydroxybenzoesäureethylester, p-Hydroxybenzoesäureoctylester, Toluolsulfonsäure-n-butylamid, Toluolsulfonsäure-n-octylamid, Benzolsulfonsäure-n-butylamid, Benzolsuffonsäure-2-ethylhexylamid infrage. Ein bevorzugter Weichmacher ist Benzolsulfonsäure-n-butylamid.

Im Vorzugsbereich enthalten die erfindungsgemäßen Granulate 0 bis 15 Gew.-% Weichmacher - jeweils bezogen auf das Polyamid.

Als sterisch gehinderte Phenole eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 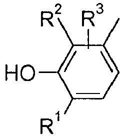 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 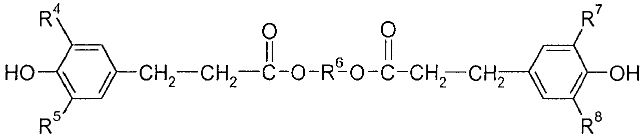 wobei R^{4,} R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formel entsprechen, sind

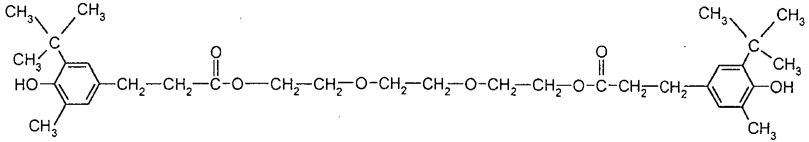

### (Irganox^{®} 245 der Firma Ciba Spezialitätenchemie GmbH)

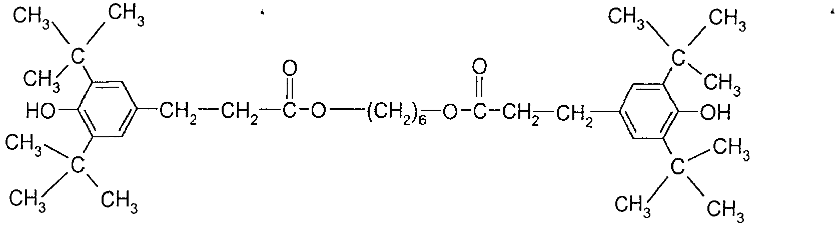

### (Irganox^{®} 259 der Firma Ciba Spezialitätenchemie GmbH)

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl4-hydroxyphenyl)-propionat], Pentaerythril -tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox^{®} 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox^{®} 1098) und das vorstehend beschriebene Irganox^{®} 245 der Firma Ciba Spezialitätenchemie GmbH, das besonders gut geeignet ist.

Die phenolischen Antioxidantien, die einzeln oder als Gemische eingesetzt werden können, sind gegebenenfalls in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Komponenten A) bis C) enthalten.

In manchen Fällen erweisen sich sterisch gehinderte Phenole mit nicht mehr als einer sterisch gehinderten Gruppe in ortho-Stellung zur phenolischen Hydroxygruppe als besonders vorteilhaft.

Als faser- oder teilchenförmige Füllstoffe C) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen bis zu 30 Gew.-%, insbesondere 1 bis 20 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Polyamidgranulal mit einer Silanverbindung oberflächlich vorbehandelt sein.

Geeignete Silanverbindungen sind solche der allgemeinen Formel

(X-(CH₂)ₙ)k-Si-(O-CₘH₂ₘ₊₁)₄₋ₖ

in der die Substituenten folgende Bedeutung haben: 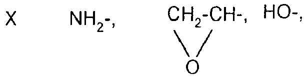
n ist eine ganze Zahl von 2 bis 10, bevorzugt 3 bis 4,
m ist eine ganze Zahl von 1 bis 5, bevorzugt 1 bis 2, und
k ist eine ganze Zahl von 1 bis 3, bevorzugt 1.

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf die faserförmigen Füllstoffe) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt, sowie zusätzlich plättchen- oder nadelförmige Nanofüllstoffe, bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit. Weitere geeignete Füllstoffe sind Kohlenstoffnanoröhren, Graphit, Blähgraphit, Graphen und Carbonnitrid.

Insbesondere wird Talkum verwendet, welches ein hydratisiertes Magnesiumsilikat der Zusammensetzung Mg₃[(OH)₂/Si₄O₁₀] oder 3 MgO·4 SiO₂·H₂O ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na und K anwesend sein, wobei die OH-Gruppe teilweise durch Fluorid ersetzt sein kann.

Beispiele für Schlagzähmodifier als Komponente C) sind Kautschuke, welche funktionelle Gruppen aufweisen können. Es können auch Mischungen aus zwei oder mehreren unterschiedlichen schlagzähmodifizierenden Kautschuken eingesetzt werden.

Kautschuke, die die Zähigkeit des Schaumes erhöhen, enthalten im allgemeinen einen elastomeren Anteil, der eine Glasübergangstemperatur von weniger als -10°C, vorzugsweise von weniger als -30°C aufweist, und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen, bevorzugt Carbonsäureanhydridgruppen.

Zu den bevorzugten funktionalisierten Kautschuken zählen funktionalisierte Polyolefinkautschuke, die aus folgenden Komponenten aufgebaut sind:
1. 40 bis 99 Gew.-% mindestens eines alpha-Olefins mit 2 bis 8 C-Atomen,
2. 0 bis 50 Gew.-% eines Diens,
3. 0 bis 45 Gew.-% eines C₁-C₁₂-Alkylesters der Acrylsäure oder Methacrylsäure oder Mischungen derartiger Ester,
4. 0 bis 40 Gew.-% einer ethylenisch ungesättigten C₂-C₂₀-Mono- oder Dicarbonsäure oder einem funktionellen Derivat einer solchen Säure,
5. 0 bis 40 Gew.-% eines Epoxygruppen enthaltenden Monomeren, und
6. 0 bis 5 Gew.-% sonstiger radikalisch polymerisierbarer Monomerer,
wobei die Summe der Komponenten 3) bis 5) mindestens 1 bis 45 Gew.-% beträgt, bezogen auf die Komponenten 1) bis 6).

Als Beispiele für geeignete α-Olefine können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt sind.

Als geeignete Dien-Monomere seien beispielsweise konjugierte Diene mit 4 bis 8 C-Atomen, wie Isopren und Butadien, nicht-konjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, cyclische Diene, wie Cyclopentadien, Cyclohexadiene, Cyclooctadiene und Dicyclopentadien, sowie Alkenylnorbornene, wie 5-Ethyliden-2-norbornen, 5-Butyliden-2-norbornen, 2- Methallyl-5-norbornen, 2-Isopropenyl-5-norbornen und Tricyclodiene, wie 3- Methyltricyclo-(5.2.1.0.2.6)-3,8-decadien, oder deren Mischungen genannt. Bevorzugt werden Hexa-1,5-dien, 5-Ethyliden-norbornen und Dicyclopentadien.

Der Diengehalt beträgt vorzugsweise 0,5 bis 50, insbesondere 2 bis 20 und besonders bevorzugt 3 bis 15 Gew.-%, bezogen auf das Gesamtgewicht des Olefinpolymerisats. Beispiele für geeignete Ester sind Methyl-, Ethyl-, Propyl-, n-Butyl, i-Butyl- und 2-Ethylhexyl-, Octyl- und Decylacrylate bzw. die entsprechenden Ester der Methacrylsäure. Von diesen werden Methyl-, Ethyl-, Propyl-, n-Butyl- und 2- Ethylhexylacrylat bzw. -methacrylat besonders bevorzugt.

Anstelle der Ester oder zusätzlich zu diesen können in den Olefinpolymerisaten auch säurefunktionelle und/oder latent säurefunktionelle Monomere ethylenisch ungesättigter Mono- oder Dicarbonsäuren enthalten sein.

Beispiele für ethylenisch ungesättigte Mono- oder Dicarbonsäuren sind Acrylsäure, Methacrylsäure, tertiäre Alkylester dieser Säuren, insbesondere tert.-Butylacrylat und Dicarbonsäuren, wie Maleinsäure und Fumarsäure, oder Derivate dieser Säuren sowie deren Monoester.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Als sonstige Monomere kommen z. B. Vinylester und Vinylether in Betracht.

Besonders bevorzugt sind Olefinpolymerisate aus 50 bis 98,9, insbesondere 60 bis 94,85 Gew.-% Ethylen, und 1 bis 50, insbesondere 5 bis 40 Gew.-% eines Esters der Acryl- oder Methacrylsäure 0,1 bis 20,0, insbesondere 0,15 bis 15 Gew.-%. Glycidylacrylat und/oder Glycidylmethacrylat, Acrylsäure und/oder Maleinsäureanhydrid.

Besonders geeignete funktionalisierte Kautschuke sind Ethylen-Methylmethacrylat-Glycidylmethacrylat-, Ethylen-Methylacrylat-Glycidylmethacrylat-, Ethylen-Methylacrylat-Glycidylacrylat- und Ethylen-Methylmethacrylat-Glycidylacrylat-Polymere.

Die Herstellung der vorstehend beschriebenen Polymere kann nach an sich bekannten Verfahren erfolgen, vorzugsweise durch statistische Copolymerisation unter hohem Druck und erhöhter Temperatur.

Der Schmelzindex dieser Copolymere liegt im Allgemeinen im Bereich von 1 bis 80 g/10 min (gemessen bei 190°C und 2,16 kg Belastung nach der Norm ISO1133).

Als Kautschuke kommen weiterhin kommerzielle Ethylen-α-Olefin-Copolymere, welche mit Polyamid reaktionsfähige Gruppen enthalten, in Betracht. Die Herstellung der zugrunde liegenden Ethylen-α-Olefin-Copolymere erfolgt durch Übergangsmetallkatalyse in der Gasphase oder in Lösung. Als Comonomere kommen folgende α-Olefine in Frage: Propylen, 1-Buten, 1-Penten, 4-Methyl-1-penten, 1-Hexen, 1-Hepten, 1-Octen, 1-Nonen, 1-Decen, 1-Undecen, 1-Dodecen, Styrol und substituierte Styrole, Vinylester, Vinylacetate, Acrylester, Methacrylester, Glycidylacrylate und -methacrylate, Hydroxyethylacrylate, Acrylamide, Acrylnitril, Allylamin und Diene, wie Butadien und Isopren.

Besonders bevorzugt sind Ethylen/1-Octen-Copolymere, Ethylen/1-Buten-Copolymere, Ethylen-Propylen-Copolymere, wobei Zusammensetzungen aus

| | |
|---|---|
| 25 bis 85 Gew.-%, | vorzugsweise 35 bis 80 Gew.-% Ethylen, |
| 14,9 bis 72 Gew.-%, | vorzugsweise 19,8 bis 63 Gew.-% 1-Octen oder 1-Buten oder Propylen oder deren Mischungen |
| 0,1 bis 3 Gew.-%, | vorzugsweise 0,2 bis 2 Gew.-% einer ethylenisch ungesättigten Mono-oder Dicarbonsäure oder einem funktionellen Derivat einer solchen Säure, |

besonders bevorzugt sind.

Das Molekulargewicht dieser Ethylen-α-Olefin-Copolymere liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

Der Anteil an Ethylen in den Ethylen-α-Olefin-Copolymere liegt zwischen 5 und 97, bevorzugt zwischen 10 und 95, insbesondere zwischen 15 und 93 Gew.-%.

In einer besonderen Ausführungsform werden mittels sogenannter "single site catalysts" hergestellte Ethylen-α-Olefin-Copolymere eingesetzt. Weitere Einzelheiten können der US 5,272,236 entnommen werden. In diesem Fall weisen die Ethylen-α-Olefin-Copolymere eine für Polyolefine enge Molekulargewichtsverteilung kleiner 4, vorzugsweise kleiner 3,5 auf.

Als weitere Gruppe von geeigneten Kautschuken sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im Allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischem oligomerem Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im Allgemeinen von Styrol, alpha-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tertiär-Butyl-(meth)acrylat, Acrylsäure, Glycidyl(meth)acrylat und Vinyloxazolin. Der Anteil an Monomeren mit funktionellen Gruppen beträgt im Allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im Allgemeinen 1 : 9 bis 9 : 1, bevorzugt 3 : 7 bis 8 : 2.

Derartige Kautschuke sind an sich bekannt und beispielsweise in der EP-A-0 208 187 beschrieben. Der Einbau von Oxazingruppen zur Funktionalisierung kann z.B. gemäß EP-A-0 791 606 erfolgen.

Eine weitere Gruppe von geeigneten Schlagzähmodifiern sind thermoplastische Polyester-Elastomere. Unter Polyester-Elastomeren werden dabei segmentierte Copolyetherester verstanden, die langkettige Segmente, die sich in der Regel von Poly-(alkylen)etherglykolen, und kurzkettige Segmente, die sich von niedermolekularen Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel TM (Du Pont), Arnitel TM (Akzo) und Pelprene TM (Toyobo Co. Ltd.) erhältlich.

Selbstverständlich können auch Mischungen verschiedener Kautschuke eingesetzt werden.

Als weitere Additive C) kann das erfindungsgemäße Granulat übliche Verarbeitungshilfsmittel wie Stabilisatoren, Oxidationsverzögerer, weitere Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, Flammschutzmittel usw. enthalten.

Als Beispiele für Oxidationsverzögerer und Wärmestabilisatoren seien Phosphite und weitere Amine (z.B. TAD), Hydrochinone, verschiedene substituierte Vertreter dieser Gruppen und deren Mischungen in Konzentrationen bis zu 1 Gew.-%, bezogen auf das Gewicht des Granulats, genannt.

Als UV-Stabilisatoren, die im Allgemeinen in Mengen bis zu 2 Gew.-%, bezogen auf das Granulat, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß und/oder Grafit, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Als Flammschutzmittel seien roter Phosphor, P- und N-haltige Flammschutzmittel sowie halogenierte FS-Mittel-Systeme und deren Synergisten genannt. Bevorzugt sind Melamin, Melamincyanurate, Al-Phosphinat (z.B. Exolit OP, Clariant), 1,2-Bis(pentabromphenyl)methan (z.B. Saytex^{®} 8010, Albemarle Corp.) und als Synergist Fyreblock 1411.

Bevorzugt ist auch ein expandierbares Granulat, enthaltend ein oder mehrere Flammschutzmittel aus der Gruppe roter Phosphor, P- und N-haltige Flammschutzmittel, Melamin, Melamincyanurate, halogenierte Flammschutzmittel-Systeme und deren Synergisten.

Erfindungsgemäße Granulate zeigen sehr gute Lagerbeständigkeit: Der Rohstoff lässt sich auch nach mehr als 8 Monaten noch zu der gleichen Dichte verschäumen wie direkt nach der Herstellung des expandierbaren Polymergranulates (Rohstoff).

Die erhaltenen Schaumstoffe zeichnen sich durch ein besonderes und für Partikelschäume neuartiges Eigenschaftsprofil aus:
- sehr geringer Temperaturschrumpf: < 1 % Schrumpf in 1 h bei 160°C
- Bestehen des B2 Brandtests (Laborapparatur) bei Dichten um 100 g/L ohne Flammschutzmittel gemäß DIN 4102,
- hohe Lösungsmittelbeständigkeit
- gute Haftung und Beständigkeit mit Epoxyklebstoffen und
- gute Metallhaftung.

Die erfindungsgemäßen Granulate und Partikelschäume eignen sich zur Verwendung zum Beispiel in der Automobilindustrie, z.B. im Kraftfahrzeugbau, in der Luftfahrtindustrie, im Transportwesen, in der Verpackungsindustrie, Bauindustrie, z.B. für temperaturbeständige Isolierungen im Bauwesen, in der Sport- und Freizeitindustrie, im Transportwesen, in den Windkraftanlagenindustrie und/oder im Konstruktionswesen. Sie sind auch geeignet in der Haus- und Gebäudetechnik und als Isolationsmaterial.

Die Erfindung wird durch die Beispiele näher erläutert ohne sie dadurch einzuschränken.

### Beispiele:

### Beispiel 1

### Herstellung

40 Teile Polyamid 6 (Ultramid B36, Fa. BASF SE, Ludwigshafen) und 60 Teile Polyamid 6I (Grivory G16, Fa. EMS-Chemie, Gross-Umstadt) wurden per Schmelzeimprägnierung mit 1,5 Teilen Wasser und 1 Teil iso-Pentan sowie 1 Teil Talkum (IT Extra, Fa. Mondo Mineralis, Amsterdam) vermischt.

Vor der Verarbeitung wurden alle Polymere unter Vakuum für mindestens 4 h bei 80 °C getrocknet. Anschließend wurden die Polyamide sowie die weiteren Komponenten, wie Talkum und Flammschutzmittel enthaltende Chargen, ohne Erwärmung in einen Gleichdrallschneckenextruder (Leistritz, Schneckendurchmesser 18 mm, Schneckenlänge 40 D) gegeben. Der Extruder wurde mit einer Schneckengeschwindigkeit von 100 Umdrehungen/min betrieben. Durch den Aufbau der Schnecke wurden alle Polymere geschmolzen und weitere Zusätze wurden homogen in die Schmelze eingearbeitet. Über die Länge der Schnecke wurden die physikalischen Treibmittel, wie Isopentan, sowie Wasser dem Extruder zugegeben und mit der Schmelze vermischt oder darin gelöst. Der Gesamtdurchsatz betrug 3 kg/h.

Die gesamte Mischung wurde über eine am Auslass des Extruders installierte Eingangsdruck-kontrollierte Zahnradpumpe unter Druck gesetzt, um ein Bypass-Ventil und eine Austrittsdüse zum Granulieren des Materials (Düsendurchmesser 0,75 mm, eine Düsenöffnung, Düsentemperatur ungefähr 280°C) zu passieren. Die Temperatur der Schmelze vor dem Granulieren lag, abhängig von dem eingesetzten Material, zwischen 200 und 240°C. Das Material wurde unter Wasserdruck (15 bar) bei relativ niedrigen Wassertemperaturen (ungefähr 42°C) granuliert, um vorzeitiges Aufschäumen zu vermeiden. Der resultierende Druck der Schmelze an der Austrittsdüse betrug je nach eingesetztem Material 140 bis 300 bar. Die erhaltene mittlere Teilchengröße des expandierbaren Granulats lag bei ungefähr 1,25 mm.

Nach der Extrusion und Unterwassergranulierung lag ein teilkristallines Matrixpolymer vor.
Die expandierbaren Partikel hatten einen mittleren Durchmesser von 1,25 mm.

Die Polymermatrix wies eine Schmelztemperatur von 210°C und einen Glaspunkt von 83°C auf bei einer Kristallinität von 5%. Die Kristallinität wurde erfindungsgemäß mit Hilfe der Dynamischen Differenzkalorimetrie (DSC, differential scanning calorimetry) durch Integration des Schmelzsignals, d.h. eine Kristallinität von 100 % entspricht 230 J/g (Journal of Polymer Science Part B Polymer Physics 35 (1997) 2219-2231) bestimmt. Die Messung erfolgt erfindungsgemäß gemäß ISO 11357-7. Die Schmelztemperatur wurde erfindungsgemäß nach ISO 11357-3 mit Heiz- und Kühlraten von 20 K/min bestimmt. Die Glasübergangstemperatur wurde erfindungsgemäß nach ISO 11357-2 mit Heiz- und Kühlraten von 20 K/min bestimmt.

### Verarbeitung und Eigenschaften

Das erhaltene Granulat wurde in einem Vorschäumer (Typ PREEX-1000 von Fa. Hirsch) bei 104°C und 0 bar Überdruck expandiert in 20 bzw. 60 sec zu Schaumperlen mit Schüttdichten von 90 g/L bzw. 140 g/l. Nach Lagern bei Raumtemperatur über Nacht wurden die Schaumperlen in einem Formteilautomaten bei 2,4 bar Überdruck zu Platten von ca. 20 cm x 30 cm x 5 cm verpresst. Nach Trocknung der Platten bei erhöhter Temperatur (von 60 bis 80°C) für 16 bis 36 h wurden trockene, sehr gut verschweißte Partikelschaumstoffe erhalten mit Dichten von 92 g/L bzw. 141 g/L.

Der erhaltene Partikelschaum zeigte einen Temperaturschrumpf kleiner 1 % bei 160°C in 1 h. Dazu wurde ein Würfel des Partikelschaumes mit einer Kantenlänge von 50,0 mm zurechtgeschnitten und in einem Umluftofen bei 160°C für eine Stunde gelagert.

### Beispiel 2

Herstellung 39 Teile Polyamid 6 ((Ultramid B36, Fa. BASF SE, Ludwigshafen), 2,5 Teile Polystyrol (158K, Fa. BASF SE, Ludwigshafen) und 58,5 Teile Polyamid 6I (Grivory G16 Fa. EMS-Chemie, Gross-Umstadt wurden per Schmelzeimprägnierung mit 2 Teilen Wasser und 2 Teilen iso-Pentan sowie 1 Teil Talkum (IT Extra, Fa. Mondo Mineralis, Amsterdam) vermischt.

Vor der Verarbeitung wurden alle Polymere unter Vakuum für mindestens 4 h bei 80 °C getrocknet. Anschließend wurden die Polyamide sowie die weiteren Komponenten, wie Talkum und Flammschutzmittel enthaltende Chargen, ohne Erwärmung in einen Gleichdrallschneckenextruder (Leistritz, Schneckendurchmesser 18 mm, Schneckenlänge 40 D) gegeben. Der Extruder wurde mit einer Schneckengeschwindigkeit von 100 Umdrehungen/min betrieben. Durch den Aufbau der Schnecke wurden alle Polymere geschmolzen und weitere Zusätze wurden homogen in die Schmelze eingearbeitet. Über die Länge der Schnecke wurden die physikalischen Treibmittel, wie Isopentan, sowie Wasser dem Extruder zugegeben und mit der Schmelze vermischt oder darin gelöst. Der Gesamtdurchsatz betrug 3 kg/h.

Die gesamte Mischung wurde über eine am Auslass des Extruders installierte Eingangsdruck-kontrollierte Zahnradpumpe unter Druck gesetzt, um durch ein Bypass-Ventil und eine Austrittsdüse zum Granulieren des Materials (Düsendurchmesser 0,75 mm, eine Düsenöffnung, Düsentemperatur ungefähr 280 °C) zu passieren. Die Temperatur der Schmelze vor dem Granulieren lag, abhängig von dem eingesetzten Material, zwischen 200 und 240 °C. Das Material wurde unter Wasserdruck (15 bar) bei relativ niedrigen Wassertemperaturen (ungefähr 42 °C) granuliert, um vorzeitiges Aufschäumen zu vermeiden. Der resultierende Druck der Schmelze an der Austrittsdüse betrug je nach eingesetztem Material 140 bis 300 bar. Die erhaltene mittlere Teilchengröße des expandierbaren Granulats lag bei ungefähr 1,25 mm.

Nach der Extrusion und Unterwassergranulierung lag ein teilkristallines Matrixpolymer vor. Die expandierbaren Partikel hatten einen mittleren Durchmesser von 1,25 mm. Die Polymermatrix wies eine Schmelztemperatur von 213°C und einen Glaspunkt von 95°C auf bei einer Kristallinität von 8%. Die Kristallinität wurde erfindungsgemäß mit Hilfe der Dynamischen Differenzkalorimetrie (DSC, differential scanning calorimetriy) durch Integration des Schmelzsignals, d.h. eine Kristallinität von 100 % entspricht 230 J/g (Journal of Polymer Science Part B Polymer Physics 35 (1997) 2219-2231) bestimmt. Die Messung erfolgt erfindungsgemäß gemäß ISO 11357-7. Die Schmelztemperatur wurde erfindungsgemäß nach ISO 11357-3 mit Heiz- und Kühlraten von 20 K/min bestimmt. Die Glasübergangstemperatur wurde erfindungsgemäß nach ISO 11357-2 mit Heiz- und Kühlraten von 20 K/min bestimmt.

### Verarbeitung und Eigenschaften

Dieses expandierbare Granulat wurde in einem Vorschäumer (Typ PREEX-1000 von Fa. Hirsch) bei 104°C und 0 bar Überdruck expandiert in 20 bzw. 60 sec zu Schaumperlen mit Schüttdichten von 70 bzw. 120 g/l. Nach Lagern bei Raumtemperatur über Nacht wurden die Schaumperlen in einem Formteilautomaten bei 2,4 bar Überdruck zu Platten von ca. 20 cm × 30 cm × 5 cm verpresst. Nach Trocknung der Platten bei erhöhter Temperatur (von 60 bis 80°C) für 16 bis 36 h wurden trockene, sehr gut ver schweißte Partikelschaumstoffe erhalten. Die Dichte der Schaumstoffteile lag bei 72 bzw. 124 g/l.

### Beispiel 3

Expandierbare mit Flammschutzadditiven.

### Herstellung

Die Herstellung der expandierbaren Granulate und der Schaumstoffteile erfolgte analog Beispiel 1. Zusätzlich wurden die angegebenen Mengen an Flammschutzadditiven zudosiert (als weitere Additive beschrieben). Die Ergebnisse sind in Tabelle 1 aufgeführt.

Schaumstoffplatten mit den Maßen 6.5 cm × 6.5 cm × 1 cm wurden analog dem in der DIN 4102 beschriebenen Prozedere beflammt und geprüft, ob der Schaumstoff selbstverlöschend ist.

### Liste der Substanzen

| Substanzname | Hersteller | Chemische Zusammensetzung |
|---|---|---|
| Ultramid B36 | BASF SE, Ludwigshafen | PA6 |
| Grivory G16 | EMS Chemie, Gross-Umstadt | PA 6I/6T |
| Talkum IT extra | Mondomineralis, Amsterdam | Talkum |
| Budit 315 | ^{®}Budenheim KG, Budenheim | Melamincyanurat |
| Saytex 8010 | Albemarle Corporation, Belgium | Bis(pentabromphenyl)methan |
| Fyrebloc 1411 | Chemtura Corporation, USA | Antimontrioxid, Polyamid (PA6) |
| Exolit OP1312 | Clariant, Switzerland | Al-Phosphinat |

**Tabelle 1: Mengen der Flammschutzmittel und Ergebnissen der Brandversuche**

| **Beispiel** | **Flammschutzmittel** | **Flammschutz (Anteil)** | **Synergist** | **Synergist (Anteil)** | **Schaumstoffdichtein g/L** | **Brandergebnis** |
|---|---|---|---|---|---|---|
| Vergleichsversuch 1 | - | - | - | - | 85 | Brennt ab |
| 3.1 | Budit 315, | 0,50 | - | - | 108 | selbstverlöschend |
| 3.2 | Budit 315, | 1,00 | - | - | 85 | selbstverlöschend |
| 3.3 | Saytex 8010, | 0,25 | Fyrebloc 1411, Chemtura corporation | 0,25 | 69 | selbstverlöschend |
| 3.4 | Saytex 8010, | 0,50 | Fyrebloc 1411, | 0,50 | 75 | selbstverlöschend |
| 3.5 | Saytex 8010, Albemarle | 1,00 | Fyrebloc 1411, Chemtura corporation | 1,00 | 86 | selbstverlöschend |
| 3.6 | Saytex 8010, Albemarle | 2,50 | Fyrebloc 1411, Chemtura corporation | 2,50 | 102 | selbstverlöschend |
| 3.7 | Exolit OP1312, Clariant | 1,00 | - | - | 68 | selbstverlöschend |
| 3.8 | Exolit OP1312, Clariant | 3,00 | - | - | 69 | selbstverlöschend |
| 3.9 | Fyrebloc | 1,25 | - | - | 60 | selbstverlöschend |

Die Beispiele belegen, dass die erhaltenen Granulate gute Flammschutzeigenschaften aufweisen.

### Beispiel 4 Expandierbare Granulate mit verschiedenen Zusätzen

Die Herstellung der expandierbaren Granulate und der Schaumstoffe erfolgte analog Beispiel 1. Zusätzlich wurden die angegebenen Mengen an Polymeren, Additiven oder Co-Treibmittel zugegeben. Die Ergebnisse sind in Tabelle 2 aufgeführt.

### Liste der Substanzen

| Substanzname | Hersteller | Chemische Zusammensetzung |
|---|---|---|
| Ultramid B36 | BASF SE, Ludwigshafen | PA6 |
| Grivory G16 | EMS Chemie, Gross-Umstadt | PA 6I/6T |
| | BASF SE | PA 6T/66/6 |
| Talkum | IT extra | Talkum GT/6616 |
| Joncryl ADR 4368 | BASF SE | Kettenverlängerer |
| VT 2410 | BASF SE | Styrol-Acrylnitril-Maleinsäureanhydrid-Copolymer |
| Kraton 61910 | Kraton Polymers | SEBS-Maleinsäureanhydrid-Copolymer |
| PS 158K | BASF SE | Polystyrol |

**Tabelle 2 - Expandierbare Granulate und Schäume mit verschiedenen Zusätzen**

| Beispiele | | Thermoplastische Polymere A2) | 4.1 | 4.2 | 4.3 | 4.4 | 4.5 | 4.6 | 4.7 | 4.8 | 4.9 |
|---|---|---|---|---|---|---|---|---|---|---|---|
| A1) | Polyamide | | | | | | | | | | |
| | PA6i | Grivory G 16 | 60 | 60 | 60 | 48 | 48 | 60 | 40 | 54 | 60 |
| | PA 6 | Ultramid B36 | 40 | 40 | 40 | 32 | 32 | | | 36 | 40 |
| | PA6T/66/6 | | | | | | | 40 | 60 | | |
| A2) | Thermoplastische Polymere | | | | | | | | | | |
| | SANMA | VT 2410 | | | | 20 | | | | | |
| | SEBS-MA | Kraton G1910 | | | | | 20 | | | | |
| | PS | PS158K | | | | | | | | 10 | |
| B) | Treibmittel | | | | | | | | | | |
| | iso-Pentan (zudosiert) | | 1.3 | 1.6 | 1.6 | 2.5 | 4.0 | 1.6 | 1.6 | 2.0 | 1.6 |
| | Wasser | | 2 | 2 | | 2 | 2 | 2 | 2 | 2 | 2 |
| | Ethanol | | | | 2 | | | | | | |
| C) | Additive | | | | | | | | | | |
| | Talkum | | 1.0 | 1.0 | 1.0 | 1.0 | 1.0 | 1.0 | 1.0 | 1.0 | 1.0 |
| | Stabilisator Cul/KI | | | 1.0 | | | | | | | |
| | Kettenverlängerer | Joncryl ADR4368 | | | | | | | | | 0.6 |
| Dichte des expandierbaren Granulats (g/L) | | | 610 | 609 | 495 | 609 | 435 | 460 | 459 | 585 | 601 |
| Vorschäumtemperatur (°C) | | | 100 | 100 | 100 | 100 | 100 | 100 | 100 | 100 | 100 |
| Vorschäumzeit (s) | | | 60 | 60 | 60 | 60 | 60 | 60 | 60 | 60 | 60 |
| Schaumdichte nach dem Vorschäumen (g/L) | | | 60 | 83 | 115 | 83 | 208 | 65 | 92 | 158 | 72 |

Bei Beispiel 4.3 handelt es sich um einen Vergleichsversuch.

Die Beispiele 4.1-4.9 belegen, dass auch mit unterschiedlichen Polymerzusätzen, Additiven und Co-Treibmitteln Schäume in überwiegend niedriger Dichte erhalten werden.

## Patentansprüche

1. Expandierbares Granulat, enthaltend
A) eine Polymermatrix bestehend aus
A1) mindestens 55 Gew.-% Polyamid (bezogen auf die Summe der Komponenten A1) und A2)) mit einer Kristallinität bis zu 30 % gegebenenfalls einer Schmelztemperatur im Bereich von 100 bis 340 °C und einer Glasübergangstemperatur im Bereich von 0 bis 150°C und
A2) 0 bis 45 Gew.-% an einem oder mehreren von der Komponente A1) unterschiedlichen thermoplastischen Polymeren;
B) ein oder mehrere physikalische Treibmittel, und
C) gegebenenfalls weitere Additive,
wobei die Kristallinität gemäß ISO 11357-7 mit Hilfe der Dynamischen Differenzkalorimetrie bestimmt wird,
die Schmelztemperatur nach ISO 11357-3 mit Heiz- und Kühlraten von 20 K/min bestimmt wird und
die Glasübergangstemperatur nach ISO 11357-2 mit Heiz- und Kühlraten von 20 K/min bestimmt wird,
wobei das expandierbare Granulat 0,01 bis 7 Gew.-%, bezogen auf die Summe der Komponenten A) und B), an einem oder mehreren physikalischen organischen Treibmitteln und 0,1 bis 10 Gew.-% H₂O (bezogen auf das Gewicht der Polymermatrix A) enthält.

2. Expandierbares Granulat gemäß Anspruch 1, wobei die Kristallinität im Bereich von 1 bis 25 % liegt.

3. Expandierbares Granulat gemäß Anspruch 1 oder 2, wobei die Glasübergangstemperatur im Bereich von 15 bis 130 °C liegt.

4. Expandierbares Granulat gemäß einem der Ansprüche 1 bis 3, wobei die Schmelztemperatur bei teilkristallinen Polymeren im Bereich von 100 bis 340 °C liegt.

5. Expandierbares Granulat gemäß einem der Ansprüche 1 bis 4, wobei die Polymermatrix A) aus der Polyamidkomponente A1) besteht.

6. Expandierbares Granulat gemäß einem der Ansprüche 1 bis 4, wobei die Polymermatrix A) 0,1 bis 4,9 Gew.-% bezogen auf die Summe der Komponenten A1) und A2) an einem oder mehreren thermoplastischen Polymeren A2) enthält.

7. Expandierbares Granulat gemäß Anspruch 6 enthaltend als Komponente A2) ein oder mehrere Styrolpolymere und/oder deren Blends mit einem oder mehreren Polyphenylenethern.

8. Expandierbares Granulat gemäß einem der Ansprüche 1 bis 7, wobei die Komponente A1) zwei oder mehr Polyamide aus der Gruppe Polycaprolactam (PA6), Polybutylenadipamid (PA 46), Polyhexamethylenadipamid (PA 66), Polyhexamethylensebacamid (PA 610), Polyhexamethylendodecanamid (PA 612), Poly-11-aminoundecanamid (PA 11), Polylaurinlactam (PA 12), Poly-m-xylylenadipamid (PAMXD 6), Polypentamethylensebacamid (PA 510), 6T/X (X=Lactam), 6T/6I, 6T/6I/XY, 6T/XT (X= geradkettiges oder verzweigtes C₄-C₁₈-Diamin), XT (X=C₄-C₁₆-Diamin), 6.12. PA PACM 12 (PACM = p-Diaminodicyclohexylmethan), PA MACM 12 (MACM = 3,3-Dimethyl-p-diaminodicyclohexylmethan), PA MPMD 6 (MPMD = 2-Methylpentamethylendiamin), PA MPMD T, PA MPMD 12, Polyhexamethylenisophthalamid (PA 6I), PA 6I/6T, PA 6-3-T (Polyamid aus Terephthalsäure, und Gemischen aus 2,2,4- und 2,4,4-Trimethylhexamethylendiamin) und deren Umamidierungsprodukten enthält.

9. Expandierbares Granulat gemäß Anspruch 8, wobei die Komponente A1) PA6, PA 6/66 und/oder PA 610 in Mischung mit PA 6I und/oder deren Umamidierungsprodukte enthält.

10. Expandierbares Granulat gemäß einem der Ansprüche 1 bis 9 enthaltend als Additive C) 0,1 bis 40 Gew.-% (bezogen auf die Summe der Komponenten A), B) und C)) an einer oder mehreren Verbindungen aus der Gruppe der Stabilisatoren, Oxidationsverzögerern, Mittel gegen Wärmezersetzung und Zersetzung durch ultraviolettes Licht, Gleit- und Entformungsmittel, Farbstoffe, Pigmente, Keimbildungsmittel. Weichmacher, Flammschutzmittel und Füllstoffe.

11. Expandierbares Granulat gemäß Anspruch 10, enthaltend ein oder mehrere Flammschutzmittel aus der Gruppe roter Phosphor, P- und N-haltige Flammschutzmittel, Melamin, Melamincyanurate, halogenierte Flammschutzmittel-Systeme und deren Synergisten.

12. Verfahren zur Herstellung eines expandierbaren Granulats gemäß einem der Ansprüche 1 bis 11 enthaltend die folgenden Schritte:
a) Bereitstellen des Polyamids A1) und gegebenenfalls der Polymerkomponente A2) in geschmolzenem Zustand,
b) Einmischen der physikalischen Treibmittelkomponente B) und gegebenenfalls von einem oder mehreren Additiven C) in die Schmelze,
c) Extrusion und
d) Granulieren der treibmittelhaltigen Schmelze unter Wasser,
wobei 0,1 bis 10 Gew.-% Wasser, bezogen auf die Summe der Komponenten A1) und A2), mittels dynamischer oder statischer Mischer direkt in die aufgeschmolzene Polymermatrix eingebracht werden.

13. Expandierbares Granulat gemäß einem der Ansprüche 1 bis 11, erhältlich durch
a) Bereitstellen einer Mischung enthaltend zwei oder mehrere Polyamide aus der Gruppe Polycaprolactam (PA6), Polybutylenadipamid (PA 46), Polyhexamethylenadipamid (PA 66), Polyhexamethylensebacamid (PA 610), Polyhexamethylendodeanamid (PA 612), Poly-11-aminoundecanamid (PA 11), Polylaurinlactam (PA 12), Poly-m-xylylenadipamid (PAMXD 6), Polypentamethylensebacamid (PA 510), 6T/X (X=Lactam), 6T/6I, 6T/6I/XY, 6T/XT (X= geradkettiges oder verzweigtes C₄-C₁₈-Diamin), XT (X=C₄-C₁₈-Diamin), 6.12. PA PACM 12 (PACM = p-Diaminodicyclohexylmethan), PA MACM 12 (MACM = 3,3-Dimethyl-p-diaminodicyclohexylmethan), PA MPMD 6 (MPMD = 2-Methylpentamethylendiamin), PA MPMD T, PA MPMD 12, Polyhexamethylenisophthalamid (PA 6I), PA 6I/6T, PA 6-3-T (Polyamid aus Terephthalsäure, Gemische aus 2,2,4- und 2,4,4-Trimethylhexamethylendiamin) und deren Umamidierungsprodukten,
b) Einmischen der physikalischen Treibmittelkomponente B) und gegebenenfalls von einem oder mehreren Additiven C) in die Schmelze,
c) Extrusion und
d) Granulieren der treibmittelhaltigen Schmelze unter Wasser,
wobei 0,1 bis 10 Gew.-% Wasser, bezogen auf die Summe der Komponenten A1) und A2), mittels dynamischer oder statischer Mischer direkt in die aufgeschmolzene Polymermatrix eingebracht werden.

## Claims

1. An expandable pelletized material comprising
A) a polymer matrix composed of
A1) at least 55% by weight of polyamide (based on the entirety of components A1) and A2)) with a crystallinity of up to 30% and optionally a melting point in the range from 100 to 340°C and a glass transition temperature in the range from 0 to 150°C, and
A2) from 0 to 45% by weight of one or more thermoplastic polymers that differ from component A1);
B) one or more physical blowing agents, and
C) optionally further additives,
where the crystallinity is determined in accordance with ISO 11357-7 with the aid of differential scanning calorimetry,
the melting point is determined to ISO 11357-3 by using rates of 20 K/min for heating and cooling, and
the glass transition temperature is determined to ISO 11357-2 by using rates of 20 K/min for heating and cooling,
where the expandable pelletized material comprises from 0.01 to 7% by weight, based on the entirety of components A) and B), of one or more physical organic blowing agents and from 0.1 to 10% by weight of H₂O (based on the weight of the polymer matrix A)).

2. The expandable pelletized material according to claim 1, where the crystallinity is in the range from 1 to 25%.

3. The expandable pelletized material according to claim 1 or 2, where the glass transition temperature is in the range from 15 to 130°C.

4. The expandable pelletized material according to any of claims 1 to 3, where, in the case of semicrystalline polymers, the melting point is in the range from 100 to 340°C.

5. The expandable pelletized material according to any of claims 1 to 4, where the polymer matrix A) is composed of polyamide component A1).

6. The expandable pelletized material according to any of claims 1 to 4, where the polymer matrix A) comprises, based on the entirety of components A1) and A2), from 0.1 to 4.9% by weight of one or more thermoplastic polymers A2).

7. The expandable pelletized material according to claim 6, comprising, as component A2), one or more styrene polymers and/or their blends with one or more polyphenylene ethers.

8. The expandable pelletized material according to any of claims 1 to 7, where component A1) comprises two or more polyamides from the group of polycaprolactam (PA6), polybutyleneadipamide (PA 46), polyhexamethyleneadipamide (PA 66), polyhexamethylenesebacamide (PA 610), polyhexamethylenedodecanamide (PA 612), poly-11-aminoundecanamide (PA 11), polylaurolactam (PA 12), poly-m-xylyleneadipamide (PAMXD 6), polypentamethylenesebacamide (PA 510), 6T/X (X = lactam), 6T/6I, 6T/6I/XY, 6T/XT (X = straight-chain or branched C₄-C₁₈-diamine) , XT (X = C₄-C₁₈-diamine) , 6.12. PA PACM 12 (PACM = p-diaminodicyclohexylmethane), PA MACM 12 (MACM = 3,3-dimethyl-p-diaminodicyclohexylmethane), PA MPMD 6 (MPMD = 2-methylpentamethylenediamine), PA MPMD T, PA MPMD 12, polyhexamethyleneisophthalamide (PA 61), PA 6I/6T, PA 6-3-T (polyamide formed from terephthalic acid, and mixtures of 2,2,4- and 2,4,4-trimethylhexamethylenediamine) and their transamidation products.

9. The expandable pelletized material according to claim 8, where component A1) comprises PA6, PA 6/66 and/or PA 610 in a mixture with PA 61, and/or comprises their transamidation products.

10. The expandable pelletized material according to any of claims 1 to 9, comprising, as additives C) (based on the entirety of components A), B), and C)), from 0.1 to 40% by weight of one or more compounds from the group of stabilizers, oxidation retarders, agents that counteract decomposition due to heat and decomposition due to ultraviolet light, lubricants and mold-release agents, dyes, pigments, nucleating agents, plasticizers, flame retardants, and fillers.

11. The expandable pelletized material according to claim 10, comprising one or more flame retardants from the group of red phosphorus, P- and N-containing flame retardants, melamine, melamine cyanurates, halogenated flame retardant systems, and their synergists.

12. A process comprising the following steps for producing an expandable pelletized material according to any of claims 1 to 11:
a) provision of the polyamide A1) and optionally of polymer component A2) in a molten state,
b) mixing to incorporate physical blowing agent component B) and optionally one or more additives C) into the melt,
c) extrusion, and
d) underwater pelletization of the melt comprising blowing agent,
where from 0.1 to 10% by weight of water, based on the entirety of components A1) and A2), is introduced directly into the molten polymer matrix by means of dynamic or static mixers.

13. The expandable pelletized material according to any of claims 1 to 11, obtainable via
a) provision of a mixture comprising two or more polyamides from the group of polycaprolactam (PA6), polybutyleneadipamide (PA 46), polyhexamethyleneadipamide (PA 66), polyhexamethylenesebacamide (PA 610), polyhexamethylenedodecanamide (PA 612), poly-11-aminoundecanamide (PA 11), polylaurolactam (PA 12), poly-m-xylyleneadipamide (PAMXD 6), polypentamethylenesebacamide (PA 510), 6T/X (X = lactam), 6T/6I, 6T/6I/XY, 6T/XT (X = straight-chain or branched C₄-C₁₈-diamine) , XT (X = C₄-C₁₈-diamine) , 6.12. PA PACM 12 (PACM = p-diaminodicyclohexylmethane), PA MACM 12 (MACM = 3,3-dimethyl-p-diaminodicyclohexylmethane), PA MPMD 6 (MPMD = 2-methylpentamethylenediamine), PA MPMD T, PA MPMD 12, polyhexamethyleneisophthalamide (PA 61), PA 6I/6T, PA 6-3-T (polyamide formed from terephthalic acid, mixtures of 2,2,4- and 2,4,4-trimethylhexamethylenediamine) and their transamidation products,
b) mixing to incorporate physical blowing agent component B) and optionally one or more additives C) into the melt,
c) extrusion, and
d) underwater pelletization of the melt comprising blowing agent,
where from 0.1 to 10% by weight of water, based on the entirety of components A1) and A2), is introduced directly into the molten polymer matrix by means of dynamic or static mixers.

## Revendications

1. Granulat expansible, contenant
A) une matrice polymère constituée par
A1) au moins 55% en poids de polyamide (par rapport à la somme des composants A1) et A2)) présentant une cristallinité de jusqu'à 30 %, éventuellement une température de fusion dans la plage de 100 à 340 °C et une température de transition vitreuse dans la plage de 0 à 150 °C et
A2) 0 à 45 % en poids d'un ou de plusieurs polymères thermoplastiques différents du composant A1) ;
B) un ou plusieurs agents gonflants physiques et
C) le cas échéant d'autres additifs,
la cristallinité étant déterminée selon la norme ISO 11357-7 à l'aide de la calorimétrie différentielle dynamique,
la température de fusion étant déterminée selon la norme ISO 11357-3 à des vitesses de chauffage et de refroidissement de 20 K/min et
la température de transition vitreuse étant déterminée selon la norme ISO 11357-2 à des vitesses de chauffage et de refroidissement de 20 K/min,
le granulat expansible contenant 0,01 à 7 % en poids, par rapport à la somme des composants A) et B), d'un ou plusieurs agents gonflants organiques physiques et 0,1 à 10 % en poids de H₂O (par rapport au poids de la matrice polymère (A)).

2. Granulat expansible selon la revendication 1, la cristallinité étant située dans la plage de 1 à 25 %.

3. Granulat expansible selon la revendication 1 ou 2, la température de transition vitreuse étant située dans la plage de 15 à 130 °C.

4. Granulat expansible selon l'une quelconque des revendications 1 à 3, la température de fusion dans le cas de polymères partiellement cristallins étant située dans la plage de 100 à 340 °C.

5. Granulat expansible selon l'une quelconque des revendications 1 à 4, la matrice polymère A) étant constituée par le composant de polyamide A1).

6. Granulat expansible selon l'une quelconque des revendications 1 à 4, la matrice polymère A) contenant 0,1 à 4,9 % en poids, par rapport à la somme des composants A1) et A2), d'un ou de plusieurs polymères thermoplastiques A2).

7. Granulat expansible selon la revendication 6, contenant, comme composant A2), un ou plusieurs polymères de styrène et/ou leurs mélanges avec un ou plusieurs polyphénylène-éthers.

8. Granulat expansible selon l'une quelconque des revendications 1 à 7, le composant A1) contenant deux polyamides ou plus du groupe formé par le polycaprolactame (PA 6), le polybutylène-adipamide (PA 46), le polyhexaméthylèneadipamide (PA 66), le polyhexaméthylènesébacamide (PA 610), le polyhexaméthylènedodécanamide (PA 612), le poly-11-amino-undécanamide (PA 11), le polylaurine-lactame (PA 12), le poly-m-xylylène-adipamide (PAMXD 6), le polypentaméthylènesébacamide (PA 510), le 6T/X (X = lactame) , le 6T/6I, le 6T/6I/XY, le 6T/XT (X = C₄-C₁₈-diamine linéaire ou ramifiée), le XT (X = C₄-C₁₈-diamine), le 6.12. PA PACM 12 (PACM = p-diaminodicyclohexylméthane), le PA MACM 12 (MACM = 3,3-diméthyl-p-diaminodicyclohexylméthane), le PA MPMD 6 (MPMD = 2-méthylpentaméthylènediamine), le PA MPMD T, le PA MPMD 12, le polyhexaméthylèneisophtalamide (PA 61), le PA 6I/6T, le PA 6-3-T (polyamide de l'acide téréphtalique et mélanges de 2,2,4-triméthylhexaméthylènediamine et de 2,4,4-triméthylhexaméthylènediamine) et leurs produits de transamidation.

9. Granulat expansible selon la revendication 8, le composant A1) contenant du PA 6, du PA 6/66 et/ou du PA 610 en mélange avec du PA 6I et/ou leurs produits de transamidation.

10. Granulat expansible selon l'une quelconque des revendications 1 à 9, contenant, comme additifs C), 0,1 à 40 % en poids (par rapport à la somme des composants A), B) et C)) d'un ou de plusieurs composés du groupe formé par les stabilisants, les retardateurs d'oxydation, les agents contre la décomposition thermique et la décomposition par la lumière ultraviolette, les agents lubrifiants et de démoulage, les colorants, les pigments, les agents de formation de germes, les plastifiants, les agents ignifuges et les charges.

11. Granulat expansible selon la revendication 10, contenant un ou plusieurs agents ignifuges du groupe formé par le phosphore rouge, les agents ignifuges contenant P et N, la mélamine, les cyanurates de mélamine, les systèmes d'agents ignifuges halogénés et leurs synergistes.

12. Procédé pour la fabrication d'un granulat expansible selon l'une quelconque des revendications 1 à 11, comprenant les étapes suivantes :
a) mise à disposition du polyamide A1) et le cas échéant du composant polymère A2) à l'état fondu,
b) mélange du composant d'agent gonflant physique B) et le cas échéant d'un ou de plusieurs additifs C) dans la masse fondue,
c) extrusion et
d) granulation sous eau de la masse fondue contenant l'agent gonflant,
0,1 à 10 % en poids d'eau, par rapport à la somme des composants A1) et A2), étant introduits au moyen d'un mélangeur dynamique ou statique directement dans la matrice polymère fondue.

13. Granulat expansible selon l'une quelconque des revendications 1 à 11, pouvant être obtenu par
a) mise à disposition d'un mélange contenant deux polyamides ou plus du groupe formé par le polycaprolactame (PA 6), le polybutylène-adipamide (PA 46), le polyhexaméthylèneadipamide (PA 66), le polyhexaméthylènesébacamide (PA 610), le polyhexaméthylènedodécanamide (PA 612), le poly-11-amino-undécanamide (PA 11), le polylaurine-lactame (PA 12), le poly-m-xylylène-adipamide (PAMXD 6), le polypentaméthylènesébacamide (PA 510), le 6T/X (X = lactame), le 6T/6I, le 6T/6I/XY, le 6T/XT (X = C₄-C₁₈-diamine linéaire ou ramifiée), le XT (X = C₄-C₁₈-diamine), le 6.12. PA PACM 12 (PACM = p-diaminodicyclohexylméthane), le PA MACM 12 (MACM = 3,3-diméthyl-p-diaminodicyclohexylméthane), le PA MPMD 6 (MPMD = 2-méthylpentaméthylènediamine), le PA MPMD T, le PA MPMD 12, le polyhexaméthylèneisophtalamide (PA 6I), le PA 6I/6T, le PA 6-3-T (polyamide de l'acide téréphtalique et mélanges de 2,2,4-triméthylhexaméthylènediamine et de 2,4,4-triméthylhexaméthylènediamine) et leurs produits de transamidation,
b) mélange du composant d'agent gonflant physique B) et le cas échéant d'un ou de plusieurs additifs C) dans la masse fondue,
c) extrusion et
d) granulation sous eau de la masse fondue contenant l'agent gonflant,
0,1 à 10 % en poids d'eau, par rapport à la somme des composants A1) et A2), étant introduits au moyen d'un mélangeur dynamique ou statique directement dans la matrice polymère fondue.
